Europäisches Patentamt

European Patent Office

Office européen des brevets

(19)

(11) Numéro de publication : **0 562 102 B1**

(12) **FASCICULE DE BREVET EUROPEEN**

(45) Date de publication du fascicule du brevet :
29.03.95 Bulletin 95/13

(51) Int. Cl.$^6$ : **F28F 13/06, B01D 61/00**

(21) Numéro de dépôt : **92922795.7**

(22) Date de dépôt : **08.10.92**

(86) Numéro de dépôt international :
**PCT/FR92/00933**

(87) Numéro de publication internationale :
**WO 93/07433 15.04.93 Gazette 93/10**

(54) **Procédé d'améliarotion de transfert de chaleur et de masse à travers une paroi.**

(30) Priorité : **10.10.91 FR 9112477**

(43) Date de publication de la demande :
**29.09.93 Bulletin 93/39**

(45) Mention de la délivrance du brevet :
**29.03.95 Bulletin 95/13**

(84) Etats contractants désignés :
**AT BE CH DE DK ES FR GB GR IE IT LI LU NL SE**

(56) Documents cités :
**EP-A- 0 250 345
EP-A- 0 276 176
WO-A-86/01425
FR-A- 2 000 669
FR-A- 2 429 988
US-A- 3 595 310
US-A- 4 791 079**

(73) Titulaire : **ELF AQUITAINE
Tour Elf,
2, Place de la Coupole,
La Défense 6
F-92400 Courbevoie (FR)**

(72) Inventeur : **GOURLIA, Jean-Paul
31, quai Jean-Jacques-Rousseau
F-69350 La Mulatière (FR)**
Inventeur : **JACUBOWIEZ, Isidore
13, rue Charles-Fridel
F-75020 Paris (FR)**

(74) Mandataire : **Timoney, Ian Charles Craig
SOCIETE NATIONALE ELF AQUITAINE
(PRODUCTION),
Tour Elf,
Cédex 45
F-92078 Paris La Défense (FR)**

## Description

La présente invention se rapporte à un procédé d'amélioration des transferts de chaleur et de masse vers et/ou à travers une paroi, et, le cas échéant, à un tel procédé destiné à être utilisé avec une paroi perméable. La présente invention se rapporte également à un couple constitué d'une paroi et d'un matériau conducteur présentant des caractéristiques de transfert de chaleur et de masse améliorées.

Certaines techniques chimiques ou physico-chimiques nécessitent le transit d'un gaz vers une paroi séparant l'espace opératoire en deux zones, paroi dont la température doit être, en outre, maîtrisée, par apport ou extraction de calories, afin de permettre ou de faciliter la mise en oeuvre de ces techniques qui pourront, par exemple, impliquer de faire passer ledit gaz d'une zone à l'autre à travers la paroi. La paroi peut ainsi délimiter un zone ouverte ou fermée constituant un milieu contenant une ou plusieurs matières gazeuses, liquides ou solides, ledit milieu étant stationnaire ou non.

Ainsi, se pose le problème de maintenir en température la paroi, par exemple par chauffage, de manière constante sur toute sa surface utile tout en assurant le libre passage du gaz vers la paroi.

Il existe également des problèmes avec les échangeurs de chaleurs dans lequel l'échange s'effectue par l'intermédiaire d'une paroi imperméable conductrice qui sépare deux fluides dont l'un au moins est à l'état gazeux. En effet, dans ce type d'échangeur le coefficient de transfert de chaleur entre le fluide gazeux et la paroi, et en conséquence l'autre fluide, est très faible.

Dans les procédés ou dispositifs actuels, il est possible soit d'améliorer le transfert de chaleur vers une paroi en disposant sur celle-ci un matériau bon conducteur thermique qui a le désavantage associé d'empêcher la libre circulation du gaz au voisinage de la paroi, soit de favoriser le passage du gaz en dégageant la paroi de tout obstacle, auquel cas le transfert de chaleur est réduit et en outre, très mal contrôlé.

Le document FR-A-2429988 décrit un échangeur de chaleur dans lequel, afin d'améliorer les transferts de chaleur et d'un effluent gazeux vers une paroi, on dispose autour de la paroi des fibres ou des fils en un matériau bon conducteur thermique, par exemple, du cuivre. La paroi utilisée est une paroi imperméable.

La présente invention a pour objet de pallier ces inconvénients en proposant un procédé permettant d'assurer à la fois le transit du gaz vers la paroi et le transfert de la chaleur.

Pour ce faire l'invention propose le procédé d'amélioration des transferts de chaleur et de matière sous forme gazeuse, au voisinage d'une paroi séparant un espace opératoire en deux zones, dans lequel on accole à ladite paroi, sur l'une au moins de ses faces, une phase solide poreuse présentant une conductivité thermique élevée, qui conduit un effluent gazeux, sous l'action d'un flux, au contact de la paroi et transmet à la paroi la chaleur fournie par une source thermique carctérisé en ce que la paroi utilisée est perméable au passage de l'effluent gazeux.

Le procédé de l'invention est applicable aussi bien aux processus impliquant un transfert de matières d'une zone à l'autre au travers de ladite paroi qui présentera alors une certaine perméabilité, qu'aux processus dans lesquels il y aura simplement un transfert de chaleur entre les deux zones.

Dans une variante de réalisation, le procédé est mis en oeuvre dans un espace opératoire séparé par une paroi perméable en deux zones, dont l'une est le siège d'une réaction chimique ou physico-chimique, l'une au moins des faces de ladite paroi, notamment celle qui est du côté de la zone contenant la source de chaleur, est accolée à une phase solide poreuse conductrice qui conduira l'effluent gazeux au voisinage de la paroi et transmettra la chaleur provenant de la source. Ce procédé permettra de contrôler précisément la température de la paroi et donc de contrôler à la fois les conditions de température de la réaction chimique ou physico-chimique et les quantités de gaz à transférer d'une zone à l'autre de l'espace opératoire.

Par paroi perméable, on entend une paroi susceptible de laisser passer des composés en phase gazeuse dans certaines conditions de température et de pression. Cette propriété désignée sous le nom de perméabilité, est modifiée par une variation de la température et peut dans certaines conditions devenir quasiment nulle.

On utilisera, selon l'application précise du procédé, des parois dont la perméabilité variera en fonction de la température de façon sensiblement linéaire ou des parois présentant des variations brutales de perméabilité liées à des variations de température.

L'invention concerne également un couple de paroi - matériau conducteur comprenant une paroi à laquelle, afin d'améliorer le transfert de masse et de chaleur à travers la paroi, est accolée une phase solide poreuse présentant une conductivité thermique élevée.

Les parois perméables utilisées dans le procédé de l'invention sont du type des membranes organiques ou minérales utilisées dans les processus de séparation, de diffusion des fluides gazeux ou de réactions catalytiques.

Il pourra s'agir de membranes denses, c'est-à-dire de membranes assurant le transfert de matière par dissolution du composé à transférer au sein du matériau de la paroi, puis diffusion et en fin relargage. Il pourra s'agir également de membranes poreuses, c'est-à-dire de membranes assurant un transfert au travers de ses pores.

A titres d'exemples de membranes organiques utilisables dans le procédé de l'invention, on peut citer les composés polymériques tels que les composés de la cellulose, les acétates notamment, le polyacrylonitrile, le caoutchouc-silicone, les copolymères polycarbonate-caoutchouc-silicone, le polytétrafluoroéthylène, le chlorure de polyvinyle, les polysulfones, les polyamides, les polyvinylacétates, les polycarbonates, les polyphosphazènes, etc..

A titre d'exemple de membranes minérales, on peut citer
- l'alumine, les céramiques à base d'alumine, d'oxyde de zirconium ou d'oxyde de titane,
- la silice,
- les verres à base de silice rendus le cas échéant poreux par un traitement à base d'acide,
- les métaux frittés par exemple le nickel ou un acier inox,
- les métaux denses tels que le Palladium ou ses alliages, ou l'Argent etc...

Ces membranes pourront le cas échéant être disposées sur un support fritté assurant la résistance mécanique.

La taille des pores des membranes minérales poreuses est généralement comprise entre 10 et 2000 Å.

Dans le procédé de l'invention, la paroi est accolée à une phase solide poreuse qui comprend du graphite expansé qui est avantageusement recomprimé pour réduire sensiblement son volume et améliorer sa conductivité.

Grâce à sa faible densité qui se trouve entre 0,001 et 1,5, le graphite expansé reste extrêmement poreux et permet donc le libre passage d'un gaz tout en assurant une bonne conductivité thermique liée à la nature du graphite.

Selon un aspect particulier de l'invention, on utilise du graphite expansé, recomprimé de telle sorte qu'il présente des propriétés de transfert de chaleur anisotrope, ce qui sera particulièrement avantageux pour maîtriser efficacement le niveau de température de la paroi. Sa densité sera alors comprise entre 0,02 et 1,5. Sa conductivité thermique sera généralement comprise entre 0,5 et 30 W/m/K.

Le graphite expansé recomprimé présente un coefficient d'anisotropie généralement compris entre 5 et 150. Ce coefficient est déterminé par le rapport entre la conductivité thermique du graphite mesurée selon une direction D1 et la conductivité thermique du graphite mesurée selon une direction D2 perpendiculaire à la précédente.

La quantité de graphite expansé utilisée dépendra principalement de l'éloignement de la source de chaleur dont il doit assurer le transfert.

Les avantages de la présente invention apparaîtront à la lecture de la description des exemples de dispositifs et de procédés ci-après, faite en référence aux dessins annexes sur lesquels :
- la figure 1 est une vue schématique en coupe d'un ensemble de couples paroi perméable - phase solide poreuse utilisable pour la mise en oeuvre du procédé de l'invention;
- la figure 2 est une vue schématique en coupe d'un couple constitué d'une paroi imperméable et d'un matériau conducteur (non couverte par les revendications).

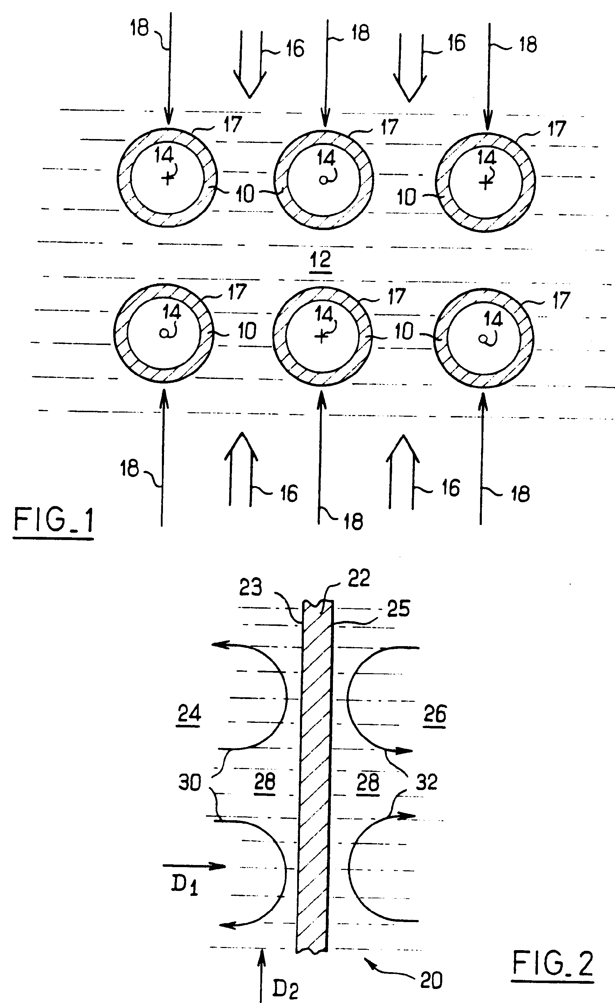

Comme représenté sur la figure 1, des tubes 10, six dans l'exemple illustré, de section circulaire, délimités par des parois 17 de type membrane sont disposés de manière régulière dans un solide poreux 12 qui, dans l'exemple illustré, est du graphite expansé, recomprimé. Un fluide passe à l'intérieur des tubes 10 soit de manière parallèle soit, dans l'exemple illustré, dans des directions alternatives telles que représentées par les flèches 14. De la chaleur émanant d'une source non représentée arrive dans le graphite expansé comme représenté schématiquement par des flèches 16. Du gaz, provenant d'une source non représentée, se déplace à l'intérieur du graphite poreux vers les parois 17 des tubes 10 tel qu'indiqué schématiquement par les flèches 18 et grâce à une différence de pression entre la phase 12 et la phase fluide présente dans les tubes 10, traverse la paroi des tubes. La quantité de gaz traversant la paroi dépend, à conditions de pressions identiques, de la température appliquée à la paroi par l'intermédiaire de la chaleur véhiculée selon les flèches 16.

L'ensemble de la figure 1 trouve son utilisation dans les procédés où l'on cherche à amener un gaz dans un espace placé au-delà d'une paroi pour le faire agir, qu'il s'agisse de réaction chimique ou physique, avec un fluide circulant à l'intérieur des tubes et où le niveau de température de la paroi a une influence sur la mise en oeuvre du processus.

## EXEMPLE 1 :

A titre d'exemple de procédé susceptible de mettre en oeuvre l'objet de l'invention, on peut citer les réactions d'oxydation partielle des hydrocarbures. En effet, ces réactions ont trois caractéristiques principales :
- leur forte exothermicité, qui peut entraîner un emballement de la réaction,

- les rendements toujours dégradés par des réactions d'oxydation totale,
- la maîtrise indispensable des quantités d'oxygène présent dans le milieu pour minimiser les réactions parasites.

C'est la raison pour laquelle il a déjà été proposé d'utiliser des procédés à membrane qui permettent d'apporter l'oxygène nécessaire à la réaction tout le long du réacteur. L'utilisation, dans ce type de procédés, du couple paroi-membranaire-solide poreux conducteur selon l'invention permet d'une part d'extraire les calories de la réaction et d'autre part de maîtriser l'injection d'oxygène en régulant la température de la paroi.

EXEMPLE 2 :

Le procédé de l'invention est utilisable dans une large gamme de procédés chimiques, qui impliquent un transfert de masse à l'état gazeux et un contrôle de la température du milieu par transfert de calories.

Le procédé de déshydrogénation de l'éthylbenzène en styrène est un autre exemple d'utilisation du procédé selon l'invention.

La réaction de déshydrogénation de l'éthylbenzène en styrène est une réaction catalytique, endothermique. Pour augmenter la conversion, il est intéressant d'une part d'augmenter la température, d'autre part de soutirer au fur et à mesure l'hydrogène produit. Cette extraction peut se faire à l'aide d'une membrane minérale dont la taille de pore est ajustée pour laisser passer sélectivement l'hydrogène.

Si, dans le processus mis en oeuvre, aucune calorie n'est apportée, la température du milieu réactionnel diminue très rapidement. Cette décroissance limite donc la conversion globale. En accolant à la paroi membranaire le solide poreux conducteur, on sera à même de rendre le réacteur membranaire isotherme. Simultanément, la vitesse de transfert de l'hydrogène au travers de la membrane sera maîtrisée dans la mesure où le flux est proportionnel à « T, T étant la température de la membrane.

EXEMPLE 3 :

L'exemple ci-après illustre l'intérêt de la régulation de la température de paroi dans un processus de séparation par membrane.

Dans un dispositif classique constitué de deux chambres séparées par une membrane minérale microporeuse en alumine dont les pores de l'ordre de 1000 Å sont remplis de n-hexadécane on traite dans des conditions nominales de fonctionnement (20°C) un mélange de composition volumique :

Inertes : 2,7 % ; $CH_4$ : 90,8 % ; $C_2H_6$ : 4,9 ;

$C_3H_8$ : 1,19 % ; i-$C_4H_{10}$ : 0,26 % ; n-$C_4H_{10}$ : 0,15 %

Dans ces conditions nominales, la perméabilité (p) et la sélectivité par rapport au méthane obtenues pour les composants des mélanges avec la membrane utilisée sont précisées dans le tableau 1 ci-dessous.

TABLEAU 1

| composants | $p(m^3.m/m^2.s.Pa)$ | sélectivité |
|---|---|---|
| $CH_4$ | 0,24 | 1 |
| $C_2H_6$ | 0,9 | 3,8 |
| $C_3H_8$ | 2,7 | 11,3 |
| 1-$C_4H_{10}$ | 5,0 | 20,6 |
| n-$C_4H_{10}$ | 9,0 | 37,5 |

On réalise la même opération en utilisant le même dispositif en équipant la chambre d'injection du mélange d'une couche de graphite expansé recomprimé de densité accolée à la paroi et reliée à une source de chaleur permettant d'assurer le chauffage de la paroi afin de monter la température à 100°C.

Les résultats obtenus dans ces conditions sont indiqués dans le tableau 2 ci-dessous.

### TABLEAU 2

| composants | perméabilité | sélectivité |
|---|---|---|
| $CH_4$ | 0,49 | 1 |
| $C_2H_6$ | 1,14 | 2,32 |
| $C_3H_9$ | 2,28 | 4,65 |
| $i-C_4H_{10}$ | 3,34 | 6,81 |
| $n-C_4H_{10}$ | 5,34 | 10,9 |

On peut observer que dans ces conditions la perméabilité des gaz légers est augmentée (doublement pour le méthane) au détriment des composés lourds.

L'ajustement de la température de la paroi permet de maîtriser la perméabilité, donc le flux, et la sélectivité.

EXEMPLE 4 :

Sur la figure 2 est représenté un échangeur de chaleur 20 formé d'une paroi imperméable 22 qui, dans l'exemple illustré est plane, séparant deux phases fluides 24 et 26 dont l'une 24 au moins est à l'état gazeux. Sur au moins la face 23 de la paroi 22 du côté du fluide gazeux 24 est accolée une phase solide poreuse 28 présentant une conductivité thermique élevée. Dans l'exemple illustré, où les deux fluides 24 et 26 sont à l'état gazeux, la phase solide poreuse 28 est accolée de part et d'autre de la paroi 22 sur les faces 23 et 25. Les deux fluides gazeux 24 et 26 sont amenés à circuler dans la phase solide poreuse 28 comme l'indiquent schématiquement les flèches 30 et 32.

La phase solide poreuse 28 comprend du graphite expansé recomprimé ayant une densité comprise entre 0,02 et 1,5. De préférence, le graphite expansé recomprimé présente, suite à sa recompression, des caractéristiques de conductivité thermique anisotropiques. Ainsi, la conductivité thermique dans la direction D, normale à la surface de la paroi 22 est nettement plus importante que celle dans une direction $D_2$ parallèle à la paroi.

Le coefficient de transfert de chaleur entre le fluide gazeux 24, 26 et la paroi se trouve amené à une valeur comprise entre 200 et 300 $W/m^2/°C$. Afin d'atteindre un coefficient de transfert optimal la densité du graphite expansé recomprimé anisotrope est de l'ordre de 0,2 à 0,4 avec une porosité de 0,9 à 0,82.

Dans certains types d'échangeurs de chaleur la paroi 22 peut avoir une forme tubulaire.

Le procédé de l'invention est naturellement utilisable dans toutes les techniques physico-chimiques nécessitant à la fois un transfert thermique et une libre circulation d'une phase gazeuse à travers une paroi.

En complément de l'exemple 4 décrit ci-dessus, on peut citer applications pratiques ci-après :

. Aération ou oxygénation d'un liquide ou d'un gaz.

. Réaction d'halogénation de composés hydrocarbonés.

. Séparation de gaz à travers une paroi/membrane poreuse ou semi-perméable, ou de perméabilité fonction de la température : paroi à perméabilité sélective ; filtres.

. Dispositifs destinés à distribuer/libérer un gaz à travers une paroi poreuse à une température donnée, soit pour obtenir un mélange soit pour stocker le gaz dans une enceinte au sein de laquelle il est piégé par variation de température.

## Revendications

1. Procédé d'amélioration des transferts de chaleur et de matière sous forme gazeuse, au voisinage d'une paroi séparant un espace opératoire en deux zones, dans lequel on accole à ladite paroi, sur l'une au moins de ses faces, une phase solide poreuse présentant une conductivité thermique élevée, qui conduit un effluent gazeux, sous l'action d'un flux, au contact de la paroi et transmet à la paroi la chaleur fournie par une source thermique caractérisé en ce que la paroi utilisée est perméable au passage de l'effluent gazeux.

2. Procédé selon la revendication 1 caractérisé en ce que la face de la paroi orientée vers la zone pourvue de la source thermique est accolée à la phase solide poreuse, et permet ainsi un passage contrôlé de l'effluent gazeux d'une zone à l'autre.

3. Procédé selon la revendication 2 caractérisé en ce que la paroi est une membrane organique.

4. Procédé selon la revendication 2 caractérisé en ce que la paroi est une membrane minérale.

5. Procédé selon la revendication 1 caractérisé en ce que la phase solide poreuse conductrice est disposée sur la face de la paroi orientée vers la zone où circule l'effluent gazeux.

6. Procédé selon la revendication 5 caractérisé en ce que les deux faces de la paroi sont pourvues d'une phase solide poreuse conductrice.

7. Procédé selon l'une des revendications 1 à 6 caractérisé en ce que la phase solide poreuse conductrice est constituée de graphite expansé au moins partiellement recomprimé.

8. Procédé selon la revendication 7 caractérisé en ce que ledit graphite a une densité comprise entre 0,001 et 1,5 et une conductivité thermique comprise entre 0,5 et 30 W/m/K.

9. Procédé selon la revendication 8 caractérisé en ce que le graphite présente des caractéristiques de transfert de chaleur anisotrope.

10. Couple de paroi-matériau conducteur comprenant une paroi (17,22) à laquelle, afin d'améliorer le transfert d'un effluent gazeux et de chaleur vers et/ou à travers la paroi, est accolée une phase solide poreuse (12,28) présentant une conductivité thermique élevée, caractérisé en ce que la paroi est perméable au passage de l'effluent gazeux.

11. Couple selon la revendication 10 caractérisé en ce que la phase solide poreuse (28) est accolée à une face (23) de la paroi (22).

12. Couple selon la revendication 10 caractérisé en ce que la phase solide poreuse (28) est accolée aux deux surfaces (23,25) de la paroi (22).

13. Couple selon l'une des revendications 10 à 12 caractérisé en ce que la paroi est tubulaire.

14. Couple selon la revendication 10 caractérisé en ce que la paroi (17) comprend une membrane organique.

15. Couple selon la revendication 10 caractérisé en ce que la paroi (17) comprend une membrane minérale.

16. Couple selon la revendication 15 caractérisé en ce que la paroi (17) comporte des pores dont la taille est comprise entre 10 et 2000 Å.

17. Couple selon l'une des revendications 10 à 16 caractérisé en ce que la phase solide poreuse comprend du graphite expansé ayant une densité comprise entre 0,001 et 0,02.

18. Couple selon l'une des revendications 10 à 16 caractérisé en ce que la phase solide poreuse comprend du graphite expansé recomprimé ayant une densité comprise entre 0,02 et 1,5.

19. Couple selon la revendication 18 caractérisé en ce que le graphite expansé présente des caractéristiques de transfert de chaleur anisotrope.

**Patentansprüche**

1. Verfahren zur verbesserten Übertragung von Wärme und gasförmigen Substanzen einer einen Funktionsraum in zwei Zonen teilenden Wandung, bei dem an die Wandung, wenigstens auf einer ihrer Seiten, ein poröser Festkörper mit hoher thermischer Leitfähigkeit angebracht wird, der unter Einsatz eines Flußmittels ein Gas mit der Wandung in Kontakt bringt und die von einer Wärmequelle gelieferte Wärme an die Wandung weiterleitet,
dadurch **gekennzeichnet**,
daß die verwendete Wandung für das Gas durchlässig ist.

**2.** Verfahren nach Anspruch 1, dadurch gekennzeichnet, daß die der mit der Wärmequelle versehenen Zone zugewandte Seite der Wandung mit dem porösen Festkörper in Verbindung steht und so ein gesteuertes Hinüberfließen des Gases von einer Zone in die andere ermöglicht wird.

**3.** Verfahren nach Anspruch 2, dadurch gekennzeichnet, daß die Wandung eine organische Membran ist.

**4.** Verfahren nach Anspruch 2, dadurch gekennzeichnet, daß die Wandung eine anorganische Membran ist.

**5.** Verfahren nach Anspruch 1, dadurch gekennzeichnet, daß der leitfähige poröse Festkörper auf der Oberfläche der Wandung angeordnet ist, auf der sich die Zone befindet, in der das Gas fließt.

**6.** Verfahren nach Anspruch 5, dadurch gekennzeichnet, daß die beiden Oberflächen der Wandung mit einem leitfähigen porösen Festkörper versehen sind.

**7.** Verfahren nach einem der Ansprüche 1 bis 6, dadurch gekennzeichnet, daß der leitfähige Festkörper aus expandiertem, mindestens teilweise wieder verdichtetem Graphit besteht.

**8.** Verfahren nach Anspruch 7, dadurch gekennzeichnet, daß der Graphit eine Dichte zwischen 0,001 und 1,5 und eine Wärmeleitfähigkeit zwischen 0,5 und 30 W/m/K aufweist.

**9.** Verfahren nach Anspruch 8, dadurch gekennzeichnet, daß der Graphit anisothrope Wärmeleitfähigkeitseigenschaften aufweist.

**10.** Verbundkörper aus leitfähigem Wandmaterial mit einer Wandung (17, 22), an die zur Verbesserung der Weiterleitung eines Gases und von Wärme zur und/oder durch die Wandung ein poröser Festkörper (12, 28) mit einer hohen Wärmeleitfähigkeit angebracht ist,
dadurch **gekennzeichnet**,
daß die Wandung für Gas durchlässig ist.

**11.** Verbundkörper nach Anspruch 10, dadurch gekennzeichnet, daß der poröse Festkörper (28) an eine Seite (23) der Wandung (22) angebracht ist.

**12.** Verbundkörper nach Anspruch 10, dadurch gekennzeichnet, daß der poröse Festkörper (28) an beide Oberflächen (23, 25) der Wandung (22) angebracht ist.

**13.** Verbundkörper nach einem der Ansprüche 10 bis 12, dadurch gekennzeichnet, daß die Wandung die Form eines Rohres hat.

**14.** Verbundkörper nach Anspruch 10, dadurch gekennzeichnet, daß die Wandung (17) eine organische Membran aufweist.

**15.** Verbundkörper nach Anspruch 10, dadurch gekennzeichnet, daß die Wandung (17) eine anorganische Membran aufweist.

**16.** Verbundkörper nach Anspruch 15, dadurch gekennzeichnet, daß die Wandung (17) Poren mit einer Größe von zwischen 10 und 2000 Å aufweist.

**17.** Verbundkörper nach einem der Ansprüche 10 bis 16, dadurch gekennzeichnet, daß der poröse Festkörper expandierten Graphit mit einer Dichte zwischen 0,001 und 0,02 aufweist.

**18.** Verbundkörper nach einem der Ansprüche 10 bis 16, dadurch gekennzeichnet, daß der poröse Festkörper expandierten Graphit mit einer Dichte zwischen 0,01 und 1,5 aufweist.

**19.** Verbundkörper nach Anspruch 18, dadurch gekennzeichnet, daß der expandierte Graphit anisotrope Wärmeübertragungseigenschaften aufweist.

**Claims**

**1.** Process for improving the transfer of heat and material in gaseous form, in the vicinity of a wall separating an operating space into two areas, in which there is attached to the wall, on at least one of its faces, a porous solid phase having high heat conductivity which conducts a gaseous effluent, under the action of a flux, in contact with the wall and transmits to the latter the heat provided by a heat source, characterised in that the wall used is permeable to the passage of a gaseous effluent.

2. A process according to Claim 1, characterised in that the face of the wall directed towards the area provided with the heat source is attached to the porous solid phase and thus permits a controlled passage of the gaseous effluent from one area to the other.

3. Process according to Claim 2, characterised in that the wall is an organic membrane.

4. Process according to Claim 2, characterised in that the wall is a mineral membrane.

5. Process according to Claim 1, characterised in that the conductive porous solid phase is disposed on the face of the wall directed towards the area in which the gaseous effluent circulates.

6. Process according to Claim 5, characterised in that the two faces of the wall are provided with a conductive porous solid phase.

7. Process according to any one of Claims 1 to 6, characterised in that the conductive porous solid phase consists of expanded graphite which is at least partially recompressed.

8. Process according to Claim 7, characterised in that the graphite has a density of between 0.001 and 1.5 and a heat conductivity of between 0.5 and 30 W/m/K.

9. Process according to Claim 8, characterised in that the graphite has anisotropic heat transfer characteristics.

10. Conductor material-wall pair comprising a wall (17, 22) to which a porous solid phase (12, 28) having high thermal conductivity is attached in order to improve the transfer of a gaseous effluent and of heat towards and/or through the wall, characterised in that the wall is permeable to the passage of the gaseous effluent.

11. Pair according to Claim 10, characterised in that the porous solid phase (28) is attached to a face (23) of the wall (22).

12. Pair according to Claim 10, characterised in that the porous solid phase (28) is attached to both faces (23, 25) of the wall (22).

13. Pair according to any one of Claims 10 to 12, characterised in that the wall is tubular.

14. Pair according to Claim 10, characterised in that the wall (17) comprises an organic membrane.

15. Pair according to Claim 10, characterised in that the wall (17) comprises a mineral membrane.

16. Pair according to Claim 15, characterised in that the wall (17) has pores of which the size is between 10 and 2000 Å.

17. Pair according to any one of Claims 10 to 16, characterised in that the porous solid phase comprises expanded graphite having a density of between 0.001 and 0.02.

18. Pair according to any one of Claims 10 to 16, characterised in that the porous solid phase comprises recompressed expanded graphite having a density of between 0.02 and 1.5.

19. Pair according to Claim 18, characterised in that the expanded graphite has anisotropic heat transfer characteristics.

FIG_1

FIG_2